(19) Europäisches Patentamt

European Patent Office

Office européen des brevets

(11) **EP 0 849 609 B1**

(12) **FASCICULE DE BREVET EUROPEEN**

(45) Date de publication et mention
de la délivrance du brevet:
**21.08.2002 Bulletin 2002/34**

(51) Int Cl.⁷: **B60S 1/08**, G01V 1/00

(21) Numéro de dépôt: **97121739.3**

(22) Date de dépôt: **10.12.1997**

(54) **Dispositif de détection ultra-sonore, notamment pour un système de nettoyage de pare-brise à commande automatique**

Ultraschalldetektionsvorrichtung, insbesondere für eine Scheibenwischeranlage mit automatischer Kontrolle

Apparatus for ultrasonic detection, notably for a windshield cleaning system with automatic control

(84) Etats contractants désignés:
**CH DE ES FR GB IT LI SE**

(30) Priorité: **20.12.1996 EP 96120576**

(43) Date de publication de la demande:
**24.06.1998 Bulletin 1998/26**

(73) Titulaire: **ASULAB S.A.**
**2074 Marin (CH)**

(72) Inventeurs:
• **Wiget, Fridolin**
**2000 Neuchâtel (CH)**

• **Saurer, Eric**
**2022 Bevaix (CH)**

(74) Mandataire: **Balsters, Robert et al**
**I C B,**
**Ingénieurs Conseils en Brevets S.A.,**
**7, rue des Sors**
**2074 Marin (CH)**

(56) Documents cités:
**EP-A- 0 626 593          EP-A- 0 631 146**
**FR-A- 2 692 535          US-A- 5 266 873**

## Description

La présente invention concerne des dispositifs de détection ultrasonores et en particulier des dispositifs de détection ultrasonores pour détecter la présence de corps étrangers tels que de l'eau sur une vitre. Un tel dispositif de détection ultrasonore est destiné à être utilisé par exemple avec un système de nettoyage d'un pare-brise à commande automatique pour véhicule, et l'invention sera décrite ci-dessous en relation avec une telle application. Toutefois, on comprendra que l'invention ne soit pas limitée à cette application.

Au cours des dernières années, on a proposé différents types de dispositifs de ce genre pour le nettoyage à commande automatique de vitre fonctionnant par détection ultrasonore de l'eau sur une surface.

L'un de ces dispositifs, décrit dans le document EP-A-0 626 593, est fixé sur la surface intérieure du pare-brise d'un véhicule et comprend un transducteur qui émet une impulsion ultrasonore. L'impulsion ultrasonore se propage dans l'épaisseur du pare-brise et est soumise aux nombreuses réflexions internes sur l'interface entre l'intérieur et l'extérieur du pare-brise. L'amplitude de ces réflexions diminue à un taux dépendant de la présence ou de l'absence d'eau sur le pare-brise.

L'électronique associé au transducteur reçoit et traite les signaux d'échos réfléchis qui en résultent. En effet, cet électronique mesure l'intégrale ou la surface de l'enveloppe du signal d'écho à l'intérieur d'une fenêtre temporelle qui s'ouvre quelques dizaines de microseconds après l'impulsion d'excitation. Cette intégrale prend une valeur donnée en l'absence de pluie et cette valeur diminue sensiblement en présence d'eau sur le pare-brise. Ainsi, il est possible, en analysant la valeur de cette intégrale, de déterminer s'il y a de l'eau sur la surface extérieure du pare-brise et donc d'activer les essuie-glaces.

Cependant, il a été constaté qu'en pratique cette façon d'aborder le problème à des inconvénients. Un problème associé avec ce dispositif est qu'il possède une résolution limitée de sorte que le fonctionnement non-voulu des essuie-glaces est parfois provoqué.

Le but de la présente invention est de réaliser un dispositif de détection ultrasonore amélioré ou qui surmonte les inconvénients de l'art antérieur.

La présente invention a pour objet un dispositif de détection ultrasonore destiné à détecter la présence de corps étrangers, comme de l'eau, sur une vitre, tel que le pare-brise d'un véhicule, comprenant un transducteur pour émettre une séquence d'impulsions ultrasonores se propageant dans l'épaisseur de ladite vitre et pour recevoir une série d'impulsions réfléchies résultant de chacune desdites impulsions ultrasonores, ledit transducteur produisant un signal d'écho représentant chacune desdites séries d'impulsions réfléchies, un intégrateur pour intégrer chacun desdits signaux d'écho à l'intérieur d'une fenêtre temporelle afin de produire une valeur d'intégrale, un circuit de retard pour contrôler les instants d'ouverture $T_1$ et/ou de fermeture $T_2$ de ladite fenêtre temporelle, et un circuit de commande agencé, d'une part, pour déterminer une valeur moyenne d'un nombre n de valeurs intégrales et, d'autre part, pour charger les valeurs desdits instants d'ouverture $T_1$ et/ou de fermeture $T_2$ dans ledit circuit de retard afin de maintenir ladite valeur moyenne à une valeur en régime établi, caractérisé en ce que ledit circuit de commande est agencé pour déterminer ladite valeur moyenne en chargeant, dans un premier temps, une première valeur de $T_1$ et/ou de $T_2$ dans ledit circuit de retard avant l'intégration d'un premier x des signaux d'échos et, dans un deuxième temps, une deuxième valeur de $T_1$ et/ou $T_2$ dans ledit circuit de retard avant l'intégration d'un deuxième n-x des signaux d'échos.

La description qui va suivre indique plus en détail les diverses caractéristiques de la présente invention. Pour faciliter la compréhension de la présente invention, il est fait référence aux dessins annexés, où le dispositif de détection ultrasonore est illustré dans un mode d'exécution préféré, dans lesquels :

- la figure 1 est une vue partielle schématique de dessus d'un véhicule automobile équipé d'un système de nettoyage à commande automatique ayant un dispositif de détection ultrasonore selon la présente invention;
- la figure 2 est un schéma d'un mode d'exécution d'un dispositif de détection ultrasonore selon la présente invention;
- la figure 3 est un graphique qui montre l'évolution temporelle de deux valeurs calculées par un circuit de commande faisant partie du dispositif de détection de la figure 2, et
- la figure 4 est un schéma d'un algorithm de fonctionnement partiel du circuit de commande de la figure 3.

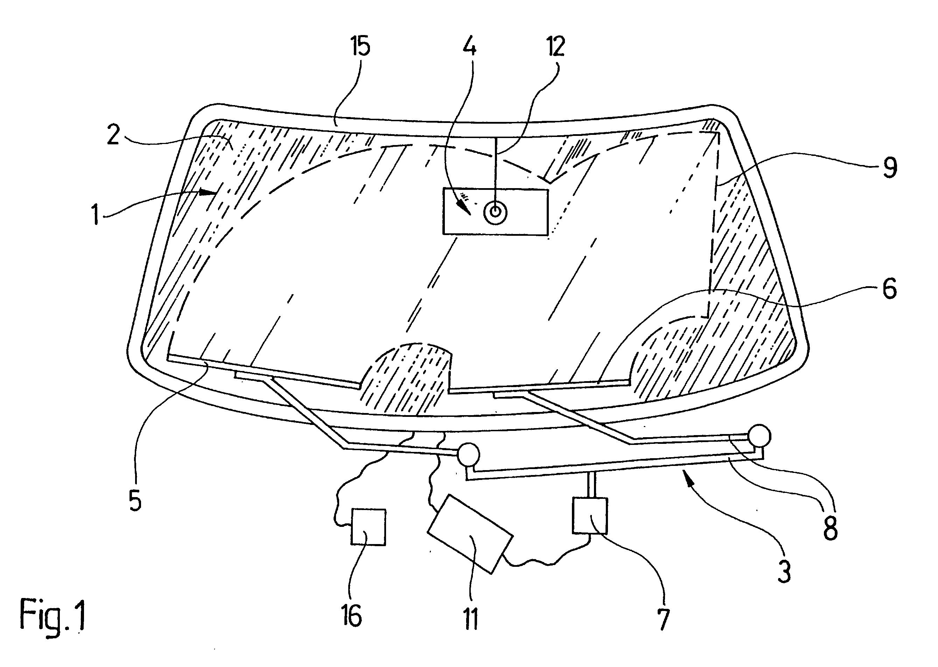

En se référant tout d'abord à la figure 1, on voit une vue schématique d'un pare-brise 1 d'un véhicule automobile équipé d'un système de nettoyage à commande automatique ayant un dispositif de détection ultrasonore selon la présente invention. Le système de nettoyage est destiné à enlever des corps étrangers déposés sur la surface extérieure 2 du pare-brise 1. Dans cet exemple, l'expression "corps étrangers" indique des éléments comme de l'eau, de la neige, de la boue, etc., qui peuvent se déposer sur le pare-brise 1 et qui peuvent brouiller le champ de vision du conducteur.

Le système de nettoyage comprend un ensemble essuie-glace 3 et un dispositif de détection ultrasonore 4 pour détecter la présence de corps étrangers sur le pare-brise. L'ensemble essuie-glace 3 comprend, de façon connue, deux balais 5 et 6 entraînés par un moteur 7 au moyen d'une tringlerie 8. Les balais 5 et 6 sont destinés à se déplacer sur la surface extérieure 2 du pare-brise 1 selon un mouvement alternatif notamment en arc de cercle, et définissent ainsi une zone prédéterminée 9 délimitée par des traits interrompus et représentant le champ de vision minimum que le conducteur doit avoir à sa disposition.

Le dispositif de détection ultrasonore 4 comprend essentiellement un transducteur 10 et un circuit électronique 11 associé à ce transducteur. Le transducteur 10 est fixé sur la face intérieure du pare-brise 1 et est relié électriquement au circuit 11 par l'intermédiaire d'un câble coaxial 12 qui passe le long du joint 15 du pare-brise 1. Un circuit d'alimentation 16 formé par exemple par la batterie du véhicule est aussi relié au circuit 11.

Le moteur 7 relié au circuit 11 sert à actionner les balais 5 et 6 quand le circuit 11 indique la présence d'eau ou d'un autre corps étranger sur la surface extérieure 2 du pare-brise. Le circuit 11 est, de préférence, réalisé sous une forme intégrée de manière à pouvoir être associé au transducteur 10 dans un ensemble unique.

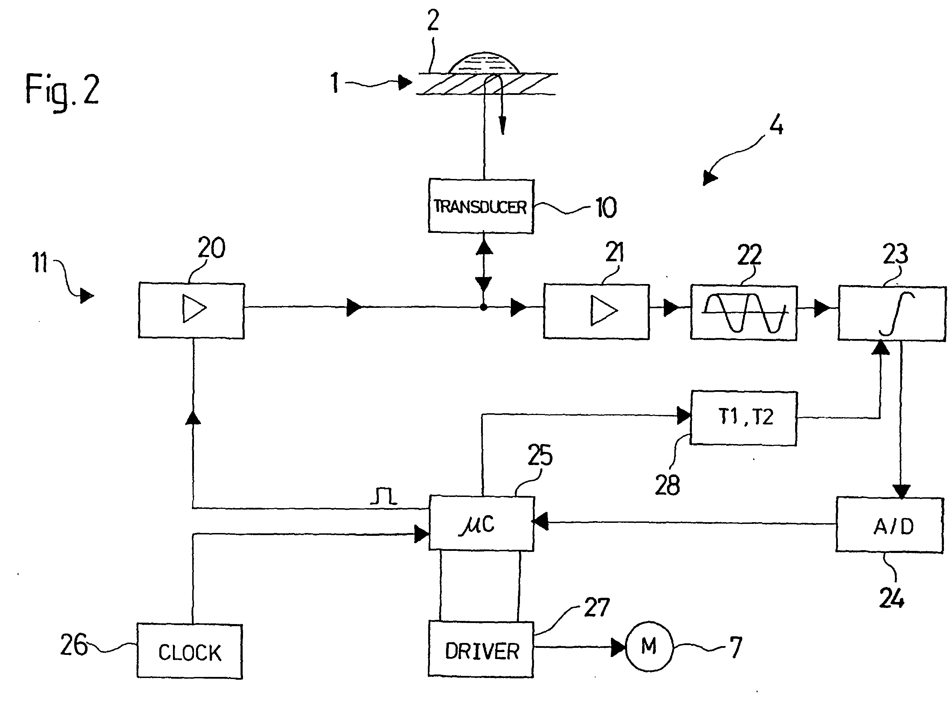

La figure 2 représente un schéma du dispositif de détection ultrasonore 4 et du moteur 7 de la figure 1. Le dispositif de détection ultrasonore 4 comprend le transducteur ultrasonore 10, deux amplificateurs 20 et 21, un détecteur d'enveloppe 22, un intégrateur 23, un convertisseur analogue/numérique 24, un circuit de commande 25, un circuit d'horloge 26, un circuit d'attaque 27 et un circuit de retard 28.

Le circuit de commande 25 génère des impulsions d'une durée de 125 nsecs, à une cadence de 2,56 kHz déterminée par le circuit d'horloge 26. Ces impulsions sont appliquées à l'entrée de l'amplificateur 20. Ce dernier a un gain réglé de sorte que l'amplitude des impulsions à sa sortie est d'environ 10 V. Les impulsions provenant de la sortie de l'amplificateur 20 sont ensuite appliquées au transducteur 10.

La fréquence propre du transducteur ultrasonore 10 est d'environ 4,5 MHz. Le transducteur 10 peut être d'un type quelconque et est utilisé d'une part, pour émettre une séquence d'impulsions incidentes ultrasonores, dont chacune se propage dans l'épaisseur du pare-brise 1, et d'autre part, pour recevoir une série d'impulsions réfléchies résultant de la propagation de chaque impulsion émise.

Le transducteur 10 engendre un signal d' "écho" électrique suite à la réception de chaque série d'impulsions réfléchies. Ce signal d'écho est appliqué à l'entrée de l'amplificateur 21. L'amplificateur 21 transforme le signal d'écho d'une tension de crête de 5 millivolts en une tension de crête de 500 millivolts.

La sortie de l'amplificateur 21 est reliée au détecteur d'enveloppe 22 qui redresse chaque signal d'écho en éliminant toute composante alternative, ce filtre augmentant la précision de l'intégration qui doit être exécutée. Par la suite, le signal d'enveloppe ainsi détecté est appliqué à l'intégrateur 23, ce dernier étant commandé par le circuit de retard 28. Le circuit de retard 28 permet à l'intégrateur 23 d'intégrer le signal d'enveloppe provenant du détecteur d'enveloppe 22 pendant une fenêtre temporelle prédéterminée. Cette fenêtre temporelle peut avoir une durée inférieure d'environ 25 $\mu$secs et elle peut être ouverte pendant un délai ajustable entre 20 et 50 $\mu$secs après que chaque impulsion est envoyée par le transducteur 10. Les valeurs $T_1$ et $T_2$, correspondantes respectivement aux instants auxquels cette fenêtre temporelle est ouverte et fermée, sont calculées et chargées dans le circuit de retard 28 par le circuit de commande 25.

Après la fermeture de chaque fenêtre temporelle, le convertisseur analogique/numérique 24 convertit la tension à la sortie de l'intégrateur 23 en une valeur numérique qui est par la suite transmise au circuit de commande 25. Ainsi, la sortie de l'intégrateur 23 n'a à être lue qu'une fois par signal d'écho, ou dans cet exemple à une fréquence de 2,56 kHz. Pour réduire les valeurs parasites, le circuit de commande 25 stocke un certain nombre de valeurs numériques consécutivement mesurées et calcule la moyenne de ces valeurs. Dans le mode d'exécution donné à titre d'exemple sur la figure 2, la moyenne de 256 valeurs consécutives peut être prise de sorte qu'avec une fréquence de répétition entre les impulsions incidentes ultrasonores de 2,56 kHz une valeur numérique moyenne est calculée à un rythme de 10 par seconde.

Le circuit de commande 25 ajuste la valeur des instants $T_1$ et $T_2$ et les charge ensuite dans le circuit de retard 28, sur la base des valeurs numériques provenant du convertisseur analogique-numérique 27 afin de maintenir la tension à la sortie de l'intégrateur 23 à une valeur en régime établi. Cette valeur en régime établi forme de préférence une portion substantielle de la tension d'entrée à pleine échelle du convertisseur analogique/numérique 24 de manière à augmenter au maximum la résolution du dispositif de détection ultrasonore 4.

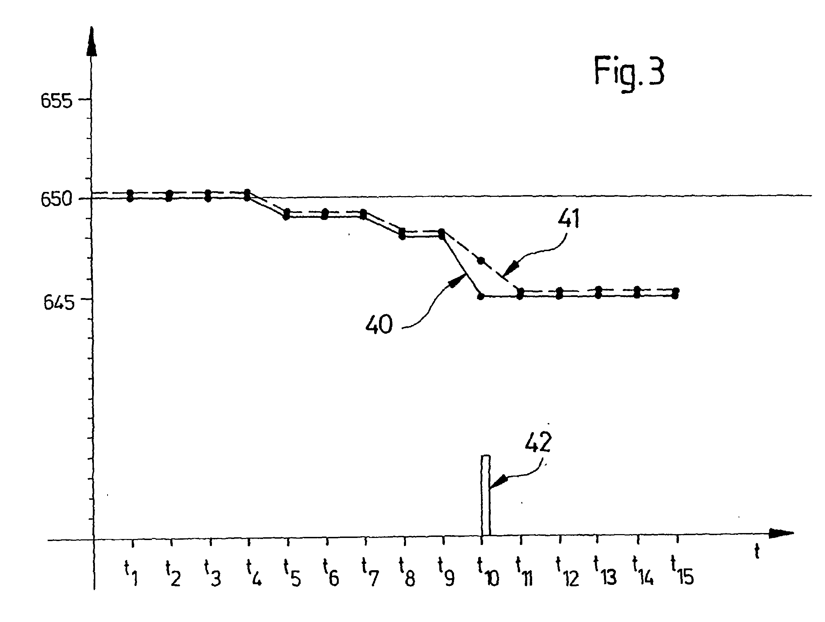

La figure 3 montre une représentation graphique de la moyenne des 256 valeurs consécutives du signal de sortie du convertisseur analogique/numérique 24, (moyenne qui est calculé par le circuit de commande 25, comme susmentionné) symbolisé par la courbe pleine 40, et une valeur de référence calculée par le circuit de commande 25, symbolisées par la courbe interrompue 41. Comme cela sera expliqué ci-après, une déviation de la courbe 40 de la valeur de référence 41 est utilisée par l'électronique pour détecter la présence d'un corps étranger sur le pare-brise et puis activer le moteur 7 associé aux essuie-glaces.

Le convertisseur analogique/numérique 24 est réglé pour que la tension d'entrée à pleine échelle corresponde à une valeur numérique de $2^{10} - 1 = 1'023$ (la connexion entre le convertisseur analogique/numérique étant dans cet exemple constitué par un bus ayant 10 binaires), et pour qu'une tension d'entrée nulle corresponde à une valeur numérique 0. La valeur en régime établi de la moyenne 40 des intégrales mesurées peut donc correspondre à une valeur numérique donnée, par exemple de 650 unités.

Si de l'eau ou un autre corps étranger n'est pas présent sur la surface extérieure 2 du pare-brise 1 et si la température ambiante est constante, le signal de sortie du convertisseur analogique/numérique 24 et les valeurs numériques moyennes correspondantes calculées par le circuit de commande 25, ne changent pas. Ceci est le cas aux instants $t_1$ à $t_4$ montrés sur la figure 3. Or, le circuit de commande 25 est agencé à calculer une valeur de référence 41 asservie à la valeur moyenne mais avec un taux de variation limité. Autrement dit, la valeur de référence calculée par le circuit de commande 25 suit celle de la valeur moyenne 40 des signaux de sortie du convertisseur analogique/numérique 24 pour autant que le taux de changement de la valeur moyenne 40 est limité.

L'expérience montre que l'intégrale mesurée ne dépend pas seulement de la présence d'eau et des valeurs de $T_1$ et $T_2$, mais aussi, de façon significative, de la température de l'ensemble pare-brise/capteur. Ainsi, si la température ambiante du pare-brise 1 ou les caractéristiques de fonctionnement du circuit 11 varient, la valeur moyenne 40 peut s'écarter temporairement de sa valeur en régime établi.

Une telle situation est représentée à la figure 3 par les écarts aux instants $t_5$ et $t_7$. En raison de l'inertie thermique du pare-brise 1 et/ou, le cas échéant de la dérive graduelle normale des caractéristiques de fonctionnement du circuit 11, ces écarts sont relativement lents. L'écart des valeurs numériques moyennes consécutives calculées par le circuit de commande 25, par rapport à la valeur en régime permanent de 650 unités, peut être de l'ordre, dans cet exemple, de 1 unité seulement entre deux instants de mesure $t_n$ et $t_{n+1}$.

Lorsqu'un tel écart est détecté par le circuit de commande 25, ce dernier cesse d'ajuster les valeurs de $T_1$ et $T_2$ dans le circuit de retard 28 pour maintenir la tension à la sortie de l'intégrateur 23 à une valeur en régime établi. Le circuit de commande 25 calcule une valeur de référence 41 asservie à la valeur moyenne mais avec un taux de variation limité, dans ce cas, à l'unité de changement entre deux instants de même $t_n$ et $t_{n+1}$ consentis. Ainsi, la valeur de référence calculée par le circuit de commande 25 suit celle de la valeur moyenne 40 des signaux de sortie du convertisseur analogique/numérique 24, mais avec un taux de variation maximum de seulement 1 unité entre les instants de mesure $t_n$ et $t_{n+1}$. Tant que les valeurs moyennes 40 consécutives calculées par le circuit de commande 25 n'ont pas de variation de plus de 1 unité, il n'y a donc pas d'écart entre les deux courbes 40 et 41, et aucun signal n'est engendré par le circuit de commande 25 pour que le circuit d'attaque 27 fasse marcher le moteur 7. Ainsi, toute activation des essuie-glaces dû uniquement aux changements de la température de l'ensemble pare-brise/capteur est évitée.

Cependant, si une ou plusieurs gouttes d'eau tombent sur la surface extérieure 2 du pare-brise 1, il se produit une atténuation importante de l'amplitude des impulsions des signaux d'écho du transducteur 10 et donc une baisse rapide de la valeur moyenne 40, comme illustré par l'écart à l'instant $t_{10}$. Dans ce cas, le circuit de commande 25 détecte l'écart entre la valeur moyenne et la valeur de référence.

Le circuit de commande 25 envoie un signal d'activation 42 au circuit d'attaque 27 quand un tel écart se produit entre les deux courbes 40 et 41. En réponse à ce signal, le circuit d'attaque 27 alimente le moteur 7 qui par la suite entraîne les balais 5 et 6 sur la surface extérieure 2 du pare-brise 1.

Lorsque les deux courbes 40 et 41 sont de nouveau coïncidentes, le circuit de commande 25 recommence à ajuster les valeurs $T_1$ et $T_2$ de la fenêtre temporelle durant laquelle l'intégrateur 23 fonctionne pour pouvoir ramener ces deux courbes à 650 unités.

Comme on a expliqué ci-dessus, les valeurs de $T_1$ et $T_2$ sont calculées par le circuit de commande 25 avant qu'elles ne soient chargées dans le circuit de retard 28. Pour faciliter le traitement de données nécessaire dans le dispositif de détection ultrasonore 4, le circuit de commande 25 et le circuit de retard 28 sont réalisés par des circuits numériques, tel qu'un agencement comportant un microprocesseur et des compteurs. Ainsi, les valeurs de $T_1$ et $T_2$ sont calculées et stockées en forme binaire. Ceci implique que les valeurs de $T_1$ et de $T_2$ n'ont qu'une résolution limitée.

Dans l'exemple décrit, la valeur de $T_1$ peut varier entre 30 et 50 µsecs avec une résolution d'environ 0,25 µsecs. Or, un saut de cette grandeur dans l'intégrale engendré par l'intégrateur 23 peut créer une déviation temporelle de plusieurs unités dans la valeur moyenne 40 et, par conséquent, provoquer l'activation non-voulue des essuie-glaces. La variation de $T_1$ doit donc se faire avec une résolution sensiblement plus fine.

Pour y parvenir, le circuit de commande 25 module la valeur de $T_1$ au cours de la période d'acquisition et de calcul de la valeur moyenne des 256 échantillons susmentionnés. En effet, le circuit de commande 25 détermine la valeur moyenne en chargeant, dans un premier temps, une première valeur de $T_1$ et/ou de $T_2$ dans le circuit de retard avant l'intégration du premier signal d'écho et, dans un deuxième temps, une deuxième valeur de $T_1$ et/ou $T_2$ dans le circuit de retard avant l'intégration du deuxième signal d'écho.

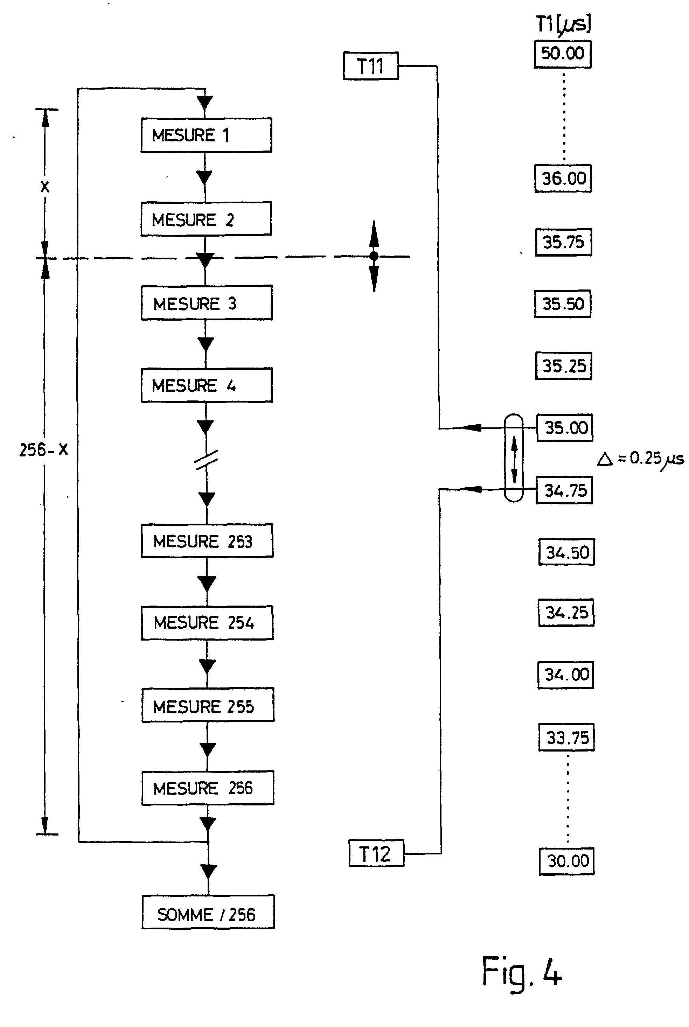

La figure 4 montre comment cette modulation est obtenue. Cette figure montre une gamme des valeurs possibles que peut prendre $T_1$ dans cet exemple, à savoir 30,00 µsecs à 50,00 par pas de 0,25 µsecs. On voit également une représentation de la mesure par le circuit de commande 25 de la valeur de l'intégrale, vue à la sortie du convertisseur analogique/numérique 24, de chacun de ces 256 échantillons (MESURE 1,..., MESURE 256), ainsi que le calcul de la moyenne de ces valeurs (SOMME/256).

Le circuit de commande 25 est agencé, d'une part, pour effectuer les x premières mesures avec une

première valeur de $T_1$ chargé dans le circuit de retard 28, par exemple 35,00 µsecs, et, les n-x dernières mesures avec une deuxième valeur de $T_1$ chargé dans le circuit de retard 28, par exemple 34,75 µsecs (où n est égale au nombre d'échantillons, à savoir 256 dans cet exemple, et x est la variable qui permet de moduler T1).

On voit que la valeur réelle de T1 est

$$\frac{(T_{11} \times x) + (T_{12} \times (n - x))}{n}$$

où $T_{11}$ est la valeur de $T_1$ durant la mesure des x premiers échantillons et $T_{12}$ est la valeur de $T_1$ durant la mesure des autres n-x échantillons. Par conséquent, les valeurs réelles de $T_1$ peuvent maintenant être sélectionnées par pas de $\frac{0{,}25\mu\ sec}{256}$ = 0,0009766 µsecs en variant la valeur de x en ce cas, entre 0 et 256. Dans l'exemple décrit ci-dessus, $T_{11}$ a une valeur de 35,00 µsecs, $T_{12}$ a une valeur de 34,75 µsecs, x a une valeur de 2 et n a une valeur de 256. Dans ce cas, la valeur réelle de $T_1$ est 34,75195 µsecs.

Ainsi, on évite de provoquer une déviation temporelle de plusieurs unités dans la valeur moyenne 40, et, par conséquent, de provoquer l'activation non-voulue des essuie-glaces, en ajustant les valeurs $T_1$ et $T_2$.

La variation de x est cyclique. Lorsque plusieurs cycles sont effectués dans le même sens, les valeurs de T11 et T12 doivent être décalées d'un pas à la fin de chaque cycle. De préférence, le système comportera un $T_2$ de valeur fixe. Seul $T_1$ sera modulé.

On comprendra que diverses modifications et/ou adjonctions puissent être faites au dispositif de détection ultrasonore de la présente invention sans en affecter la portée qui est définie dans les revendications annexées.

## Revendications

1. Dispositif de détection ultrasonore destiné à détecter la présence de corps étrangers, comme de l'eau, sur une vitre (1), tel le pare-brise d'un véhicule, comprenant :

   - un transducteur (10) pour émettre une séquence d'impulsions ultrasonores qui peuvent se propager dans l'épaisseur de ladite vitre (1) et pour recevoir une série d'impulsions réfléchies résultant de chacune desdites impulsions ultrasonores, ledit transducteur (10) produisant un signal d'écho représentant chacune desdites séries d'impulsions réfléchies;
   - un intégrateur (23) pour intégrer chacun desdits signaux d'écho à l'intérieur d'une fenêtre temporelle afin de produire une valeur d'intégrale;
   - un circuit de retard (28) pour contrôler les instants d'ouverture $T_1$ et/ou de fermeture $T_2$ de ladite fenêtre temporelle, et
   - un circuit de commande (25) agencé, d'une part, pour déterminer une valeur moyenne d'un nombre n de valeurs intégrales et, d'autre part, pour charger les valeurs desdits instants d'ouverture $T_1$ et/ou de fermeture $T_2$ dans ledit circuit de retard (28) afin de maintenir ladite valeur moyenne à une valeur de régime établi,

   **caractérisé en ce que** ledit circuit de commande (25) est agencé pour déterminer ladite valeur moyenne en chargeant, dans un premier temps, une première valeur de $T_1$ et/ou de $T_2$ dans ledit circuit de retard (28) avant l'intégration de x premiers signaux d'échos et, dans un deuxième temps, une deuxième valeur de $T_1$ et/ou $T_2$ dans ledit circuit de retard avant l'intégration d'un deuxième nombre n-x des signaux d'échos.

2. Dispositif de détection ultrasonore selon la revendication 1, **caractérisé en ce que** ledit circuit de commande (25) est également agencé pour calculer une valeur de référence (41) asservie à ladite valeur moyenne (40) mais avec un taux de variation limité, et

   - des moyens (27) pour détecter des écarts temporelles entre ladite valeur moyenne et ladite valeur de référence.

3. Système de nettoyage à commande automatique d'une vitre tel qu'un pare-brise de véhicule ayant un dispositif de détection ultrasonore selon l'une quelconque des revendications 1 ou 2, **caractérisé en ce qu'**il comprend en outre des moyens de nettoyage (3) pour nettoyer une zone prédéterminée de la surface extérieure de ladite vitre (1), des moyens d'entraînement (7) pour entraîner lesdits moyens de nettoyage (3), et pour faire fonctionner lesdits moyens de nettoyage (3) en réponse à une indication de corps étrangers sur la surface extérieure de la vitre (1).

4. Système de nettoyage selon la revendication 3, **caractérisé en ce que** ladite vitre est un pare-brise (1), et **en ce que** lesdits moyens de nettoyage comprennent un ensemble d'essuie-glaces (3) pour nettoyer la surface extérieure du pare-brise (1).

## Patentansprüche

1. Ultraschall-Erfassungsvorrichtung, die dazu bestimmt ist, das Vorhandensein von Fremdkörpern wie etwa Wasser auf einer Glasscheibe (1), z. B. auf der Windschutzscheibe eines Fahrzeugs, zu erfassen, und umfaßt:

- einen Meßwandler (10), der eine Folge von Ultraschallimpulsen aussendet, die sich in Dikkenrichtung der Glasscheibe (1) ausbreiten, und eine Reihe reflektierter Impulse empfängt, die aus jedem der Ultraschallimpulse resultieren, wobei der Meßwandler (1) ein Echosignal erzeugt, das jede der Reihen reflektierter Impulse repräsentiert;
- einen Integrator (23), der jedes der Echosignale innerhalb eines Zeitfensters integriert, um einen Integralwert zu erzeugen;
- eine Verzögerungsschaltung (28), die Öffnungszeitpunkte $T_1$ und/oder Schließzeitpunkte $T_2$ des Zeitfensters steuert, und
- eine Steuerschaltung (25), die einerseits so beschaffen ist, daß sie einen Mittelwert einer Anzahl n von Integralwerten bestimmt, und andererseits so beschaffen ist, daß sie die Werte der Öffnungszeitpunkte $T_1$ und/oder Schließzeitpunkte $T_2$ in die Verzögerungsschaltung (28) lädt, um den Mittelwert auf einem Wert des eingestellten Bereichs zu halten,

**dadurch gekennzeichnet, daß** die Steuerschaltung (25) so beschaffen ist, daß sie den Mittelwert bestimmt, indem sie zu einem ersten Zeitpunkt vor der Integration von x ersten Echosignalen einen ersten Wert für $T_1$ und/oder für $T_2$ in die Verzögerungsschaltung (28) lädt und zu einem zweiten Zeitpunkt vor der Integration einer zweiten Zahl n - x von Echosignalen einen zweiten Wert für $T_1$ und/oder $T_2$ in die Verzögerungsschaltung lädt.

2. Ultraschall-Erfassungsvorrichtung nach Anspruch 1, **dadurch gekennzeichnet, daß** die Steuerschaltung (25) außerdem so beschaffen ist, daß sie einen Referenzwert (41) berechnet, der auf den Mittelwert (40) geregelt wird, jedoch mit einem begrenzten Variationsgrad, und

- Mittel (27) vorgesehen sind, die die zeitlichen Abstände zwischen dem Mittelwert und dem Referenzwert erfassen.

3. Reinigungssystem mit automatischer Steuerung für eine Glasscheibe, z. B. eine Fahrzeug-Windschutzscheibe, das eine Uitraschall-Erfassungsvorrichtung nach Anspruch 1 oder 2 besitzt, **dadurch gekennzeichnet, daß** es außerdem Reinigungsmittel (3), die eine vorgegebene Zone auf der äußeren Oberfläche der Glasscheibe (1) reinigen, sowie Antriebsmittel (7), die die Reinigungsmittel (3) antreiben und als Antwort auf die Angabe von Fremdkörpern auf der äußeren Oberfläche der Glasscheibe (1) in Betrieb versetzen, umfaßt.

4. Reinigungssystem nach Anspruch 3, **dadurch gekennzeichnet, daß** die Glasscheibe eine Windschutzscheibe (1) ist und daß die Reinigungsmittel eine Gruppe von Scheibenwischern (3) umfassen, die die äußere Oberfläche der Windschutzscheibe (1) reinigen.

**Claims**

1. Ultrasonic detection device arranged to detect a presence of foreign bodies, such as water, on a window (1), such as the windscreen of a vehicle, comprising :

- a transducer (10) for emitting a sequence of ultrasonic pulses which can propagate through the thickness of said window (1) and for receiving a series of reflected pulses resulting from each of said ultrasonic pulses, said transducer (10) producing an echo signal representative of each of said series of reflected pulses;
- an integrator (23) for integrating each of said echo signals within a time window so as to produce an integral value;
- a time delay circuit (28) for controlling the instance of opening $T_1$ and/or of closing $T_2$ said time window, and
- a control circuit (25) arranged, on the one hand, to determine an average value of a number of n integrated values and, on the other hand, to load a value of said instance of opening $T_1$ and or of closing $T_2$ into said time delay circuit (28) so as to maintain said average value at a steady value,

**characterized in that** said control circuit (25) is arranged to determine said average value by initially loading a first value of $T_1$ and/or of $T_2$ in said time delay circuit (28) before the integration of a first x of echo signals, and secondly loading a second valued of $T_1$ and/or of $T_2$ in said time delay circuit before the integration of a second number n-x of said echo signals.

2. Ultrasonic detection device according to claim 1, **characterized in that** the control circuit (25) is also arranged to calculate a reference value (41) slaved to said average value (40) but having a limited variation ratio, and averages (27) for detecting temporary deviations between said average value and said reference value.

3. Automatically controlled cleaning system of a window, such as a windscreen of a vehicle, having an ultrasonic detection device according to any one of the claims 1 or 2, **characterized in that** it further comprises cleaning averages (3) for cleaning a predetermined zone of the exterior surface of said window (1), driving averages (7) for driving said cleaning averages (3) and for operating said cleaning averages (3) in response to an indication of a foreign body on the exterior surface of the window (1).

4. Cleaning system according to claim 3, **characterized in that** said window is a windscreen (1), and **in that** said cleaning averages comprise a set of windscreen wipers (3) for cleaning the exterior surface of said windscreen (1).

Fig.1

EP 0 849 609 B1

Fig. 2

EP 0 849 609 B1

Fig. 3

Fig. 4